# EUROPÄISCHE PATENTSCHRIFT

(11) **EP 3 023 170 B1**
(45) Veröffentlichungstag und Bekanntmachung des Hinweises auf die Patenterteilung: **14.06.2017**
(21) Anmeldenummer: 15186591.2
(22) Anmeldetag: 24.09.2015
(51) Int. Cl.: B21D 43/05

(54) **TRANSFERVORRICHTUNG**
TRANSFER DEVICE
DISPOSITIF DE TRANSFERT

(30) Priorität: 20.11.2014 DE 102014117026
(43) Veröffentlichungstag der Anmeldung: 25.05.2016
(73) Patentinhaber: Strothmann Machines & Handling GmbH, 33758 Schloß Holte-Stukenbrock (DE)
(72) Erfinder: Krause, Mathias, 32139 Spenge (DE); Rosenhäger, Jörg, 33739 Bielefeld (DE); Wesling-Schäfers, Markus, 59590 Geseke (DE)
(74) Vertreter: von dem Borne, Andreas

(56) Entgegenhaltungen:
- EP-B1- 1 689 540
- DE-U1-202012 104 324

## Beschreibung

Die Erfindung betrifft eine Transfervorrichtung für den Transport von Werkstücken innerhalb einer Pressenanlage, insbesondere für den Transport von Karosserieteilen innerhalb einer Pressenanlage für die Automobilindustrie, mit zumindest einem sich in Balkenlängsrichtung (Y-Richtung) erstreckenden Transferbalken, an welchem ein oder mehrere Werkzeuge, z.B. Greiferarme, befestigt oder befestigbar sind, wobei der Transferbalken endseitig an (zwei) entlang einer Transferrichtung (X-Richtung) verfahrbaren X-Schlitten gehalten ist, sowie vorzugsweise in einer Vertikalrichtung (Z-Richtung) heb- und senkbar ist.

Eine solche Transfervorrichtung wird in der Praxis in Pressenanlagen bzw. Pressenstraßen, z.B. in der Automobilindustrie eingesetzt. Damit lassen sich Werkstücke, z.B. Karosserieteile transportieren, z.B. innerhalb einer Pressenstraße von einer Presse bzw. Pressenstufe zu der nächsten Presse bzw. Pressenstufe bzw. von einer Behandlungseinrichtung zu einer nächsten Behandlungseinrichtung transportieren. Wesentlicher Bestandteil einer Transfervorrichtung ist der Transferbalken, an dem in der Regel eine Vielzahl von Werkzeugen, z.B. Greiferarmen, befestigt sind, welche mit Saugeinrichtungen versehen sein können, so dass der Transferbalken insgesamt auch als Saugbalken bezeichnet werden kann und mit entsprechenden Unterdruck-Vakuumanschlüssen versehen ist. Um einen flexiblen Transfer zu ermöglichen, ist der Transferbalken in der Regel in unterschiedlichen Richtungen verfahrbar und/oder drehbar. Vorzugsweise sind mehrere Greiferarme über gemeinsame Verbindungsrohre miteinander unter Bildung eines "Toolings" verbunden, welches auch als Saugspinne bezeichnet wird und insgesamt mehrere Saugnäpfe aufweisen kann.

So kennt man aus der DE 20 2012 104 324 U1 eine Transfervorrichtung der eingangs beschriebenen Art, bei welcher der Transferbalken längenveränderbar ausgebildet ist und aus einem ersten Balkenteil und aus einem zweiten Balkenteil besteht, die jeweils entlang der Längsrichtung (Y-Richtung) gegeneinander verschiebbar sind, wobei das erste Balkenteil mit einem Einsteckende verschiebbar in ein Aufnahmeende des zweiten Balkenteils eingreift. Die bekannte Transfervorrichtung ist kompakt aufgebaut und ermöglicht einen sehr flexiblen Transfer des Werkstücks bei gleichzeitig hoher Stabilität. Der Transferbalken lässt sich in grundsätzlich bekannter Weise mit Hilfe von Kopfstücken bzw. X-Schlitten entlang der Transferrichtung (X-Richtung) verfahren und es ist außerdem vorgesehen, dass sich der Transferbalken entlang einer vertikalen Z-Richtung anheben und absenken lässt. Optional lassen sich die beiden Kopfstücke gegeneinander und folglich entlang der Y-Richtung verfahren, so dass damit die Länge des Transferbalkens verändert wird und sich damit die Position der an dem Transferbalken befestigten Greiferarme verändert. Dabei können die beiden Hälften der Transfervorrichtung abweichend voneinander verfahren werden, denn der längenveränderbare Transferbalken ermöglicht einen Längenausgleich. Die insoweit bekannten Maßnahmen haben sich in der Praxis bewährt, sie sind jedoch weiter entwicklungsfähig.

Im Übrigen kennt man aus der WO 2005/051563 A1 bzw. EP 1 689 540 B1 eine Transfervorrichtung, bei welcher ein Vertikalschlitten über Spindeln an Vertikalträgern heb- und senkbar gehalten ist. Dieser Vertikalschlitten trägt Längsträger, die sich entlang der Transferrichtung erstrecken und nicht nur heb- und senkbar, sondern auch um eine horizontale Achse drehbar gehalten sind. An diesen Horizontalträgern ist ein Transferbalken verfahrbar und im Übrigen drehbar gehalten.

Der Erfindung liegt die Aufgabe zugrunde, eine Transfervorrichtung der eingangs beschriebenen Art zu schaffen, die sich bei einfachem und kompaktem Aufbau durch hohe Flexibilität und optimierte Transportgeschwindigkeit auszeichnet.

Zur Lösung dieser Aufgabe lehrt die Erfindung bei einer gattungsgemäßen Transfervorrichtung der eingangs beschriebenen Art, dass der Transferbalken relativ zu den X-Schlitten entlang der Balkenlängsrichtung (Y-Richtung) bewegbar bzw. verfahrbar ist. Dabei liegt es besonders bevorzugt im Rahmen der Erfindung, dass der Transferbalken als in Betrieb nicht teleskopierender Balken und folglich starrer Balken mit fest vorgebebener und fest eingestellter Balkenlänge ausgebildet ist. Der Transferbalken ist vorzugsweise endseitig an Y-Schlitten gehalten, wobei die Y-Schlitten, welche an den X-Schlitten entlang der Balkenlängsrichtung (Y-Richtung) bewegbar gehalten sind. Besonders vorteilhaft ist es, wenn an den X-Schlitten Y-Stellantriebe befestigt sind, welche entlang der Balkenlängsrichtung (Y-Richtung) auf den Transferbalken bzw. auf die Y-Schlitten arbeiten. Solche Y-Stellantriebe sind erfindungsgemäß z.B. als Zylinderkolbenanordnungen, besonders bevorzugt als pneumatische Zylinderkolbenanordnungen ausgebildet.

Durch die Bewegbarkeit des Transferbalkens entlang der Balkenlängsrichtung besteht die Möglichkeit, verschiedenste Winkelstellungen des Transferbalkens im Zuge des Betriebes auszugleichen, ohne dass ein teleskopierender Transferbalken erforderlich ist. Der Ausgleich dieser Winkelstellungen kann grundsätzlich aktiv durch geeignete Ansteuerung der Y-Stellantriebe erfolgen. Besonders bevorzugt erfolgt der Ausgleich jedoch passiv, indem die Y-Stellantriebe als Zylinderkolbenanordnungen, z.B. als pneumatische Zylinderkolbenanordnungen ausgestaltet werden. So besteht die Möglichkeit, einen dieser Pneumatik-Zylinder als Festlagerseite in einer bestimmten Funktionsstellung zu arretieren und den anderen Pneumatik-Zylinder als Loslager "frei" zu lassen. Der Ausgleich der Winkelstellungen erfolgt folglich nicht durch Längenausgleich des Balkens selbst, sondern durch eine variable "Aufhängung" über Pneumatik-Zylinder. Diese Pneumatik-Zylinder können sehr einfach ausgestaltet werden, denn sie müssen nicht in verschiedensten Positionen ansteuerbar und folglich auch nicht weggesteuert ausgebildet werden, sondern es ist ausreichend, wenn die Pneumatik-Zylinder in ihre definierten Endlagen gebracht werden können und sich (auf der Loslagerseite) frei zwischen diesen Endlagen bewegen können.

Alternativ oder ergänzend besteht über die Y-Stellantriebe, z.B. Pneumatik-Zylinder, die Möglichkeit, den Transferbalken automatisiert auszukuppeln und einzukuppeln. Dazu ist der Transferbalken vorzugsweise über lösbare Balkenkupplungen austauschbar an den Y-Schlitten oder alternativ auch an den X-Schlitten angeschlossen. Solche Balkenkupplungen weisen jeweils ein gestellseitiges Aufnahmekupplungselement und ein balkenseitiges Balkenkupplungselement auf, welche im Zuge des Kuppelns ineinandergreifen. Dieses kann durch Betätigen der Y-Stellantriebe erfolgen, denn dadurch lassen sich die Aufnahmekupplungselemente entlang der Y-Richtung in die Balkenkupplungselemente einfahren. Den Y-Stellantrieben, die bevorzugt pneumatisch ausgebildet sind, kommt folglich sowohl eine Ausgleichsfunktion während des Betriebes als auch eine Kupplungs- bzw. Entkupplungsfunktion zu. Außerdem kann über die Y-Stellantriebe im Zuge der Inbetriebnahme eine Anpassung an die jeweilige Pressengeometrie im Sinne einer "Nullpunkteinstellung" erfolgen.

Besonders interessant ist die Tatsache, dass auf Standard-Kupplungselemente zurückgegriffen werden kann, z.B. Schnellkupplungen, die auch für Roboter, z.B. Knickarm-Roboter eingesetzt werden. Die eingesetzten Kupplungen sind besonders bevorzugt pneumatisch entriegelbar und verriegelbar. Das bedeutet, dass unabhängig von dem pneumatisch betätigten Einkuppeln und Auskuppeln der Enden eine pneumatische Entriegelung und Verriegelung möglich ist. Dazu weisen die Kupplungselemente vorzugsweise entsprechend in radialer Richtung pneumatisch betätigbare Verriegelungselemente auf. Diese pneumatische Verriegelungs- und Entriegelungsfunktion ist bei herkömmlichen Standardkupplungen verfügbar und auf diese kann erfindungsgemäß zurückgegriffen werden.

Von besonderer Bedeutung ist außerdem, dass der Transferbalken in einer Vielzahl von Bewegungsrichtungen bewegbar und ansteuerbar ist, so dass eine Vielzahl von Freiheitsgraden zur Verfügung gestellt wird. Dazu ist der Transferbalken z.B. um eine Balkenachse (B-Achse) drehbar, z.B. um eine Balkenachse drehbar an dem Y-Schlitten befestigt. Dazu ist bevorzugt ein separater Antrieb für die Drehbewegung (B-Antrieb) vorgesehen. Alternativ und ergänzend kann der Transferbalken kardanisch an den Y-Schlitten angelenkt sein, so dass zwei weitere Drehrichtungen realisiert werden. Damit kann z.B. eine Drehung um eine vertikale Achse (C-Achse) und um eine horizontale Achse (A-Achse) realisiert werden. Dieses lässt sich z.B. dadurch realisieren, dass an dem Y-Schlitten ein Aufnahmegehäuse befestigt ist, dass vorzugsweise um eine vertikale Achse (C-Achse) drehbar an dem Y-Schlitten befestigt ist, wobei der Transferbalken um die Balkenachse (B-Achse) drehbar in/an dem Aufnahmegehäuse gehalten ist. Dieses Aufnahmegehäuse kann z.B. aus Außengehäuse und Innengehäuse zusammengesetzt sein, wobei das Außengehäuse um die C-Achse drehbar an einem der Schlitten, z.B. dem Y-Schlitten angeordnet ist und wobei das Innengehäuse um die horizontale Achse (A-Achse) an dem Außengehäuse gehalten ist und wobei der Transferbalken dann um die Balkenachse (B-Achse) drehbar in/an dem Innengehäuse gehalten ist. Insgesamt lassen sich in sehr kompakter Form eine Vielzahl von Freiheitsgraden zur Verfügung stellen, ohne dass die Variabilität der Anlage beeinträchtigt wird.

Die Transfervorrichtung weist im Übrigen in grundsätzlich bekannter Weise zwei Vertikalständer auf, an denen jeweils ein vertikal verfahrbarer Z-Schlitten geführt ist. An diesen Z-Schlitten können dann die bereits erwähnten X-Schlitten entlang der X-Richtung verfahrbar geführt sein. Dabei liegt es bevorzugt im Rahmen der Erfindung, dass an dem Z-Schlitten ein erster X1-Schlitten entlang der X1-Richtung verfahrbar ist und an diesem X1-Schlitten ist wiederum ein zweiter X2-Schlitten entlang der X2-Richtung verfahrbar, wobei die X1-Richtung und die X2-Richtung parallel zueinander orientiert sind und insgesamt als X-Richtung bezeichnet werden können. Durch das Zusammenwirken von X1-Schlitten und X2-Schlitten lässt sich die Transfervorrichtung mit besonders hohen Geschwindigkeiten unter optimaler Raumausnutzung steuern.

Dabei werden besonders bevorzug zwei spiegelbildlich angeordnete Transferhälften zur Verfügung gestellt, die über den kardanisch aufgehängten Transferbalken miteinander verbunden sind und so insgesamt die Transfervorrichtung bilden. Die Transferhälften werden besonders bevorzugt an den Pressenständern der entsprechenden Presse befestigt, z.B. an die Pressenständer geschraubt. Dabei liegt es im Rahmen der Erfindung, dass die Vertikalträger an der Vorderseite der jeweiligen Pressenständer und folglich nicht an den Innenseiten befestigt werden. Die erfindungsgemäße Transfervorrichtung kommt besonders bevorzugt bei Tandempressenanlagen zum Einsatz. Pro Pressenstufe ist dann eine Transfervorrichtung vorgesehen, welcher die entsprechenden Teile der Presse zuführt. Am Anlagenende ist dann außerdem für den Teileaustrag aus der letzten Pressenstufe eine weitere Transfervorrichtung vorgesehen. Die Transfervorrichtung nimmt Bauteile, z.B. Karosserieteile aus z.B. Stahlblech auf und legt diese in die Pressenwerkzeuge der jeweiligen Presse bzw. Pressenstufe ein. Nach Formgebung in der Presse wird das Bauteil (von der nächsten Transferrichtung) in Produktionsrichtung entnommen (Pressenauslauf) und weitergetaktet in die nächste Pressenstufe oder auf den Anlagenauslauf abgelegt. Die Transfervorrichtung ist besonders kompakt aufgebaut und leicht zugänglich. Denn es besteht die Möglichkeit, sämtliche Baugruppen oberhalb des Flurs zu montieren. Weder Ausgleichsbehälter des hydraulischen Masseausgleichs noch Versorgungsleitungen müssen in den Pressenkeller gelegt werden. Dieses verkürzt den Zeitaufwand für Wartungsarbeiten erheblich. Der auf diese Weise zur Verfügung stehende Raum wird genutzt, um die Werkzeuge (Toolings) mittels Tooling-Carts während des Werkzeugwechsels automatisiert in die Übergabeposition zu fahren. Die erfindungsgemäße Transfervorrichtung kann flexible Orientierungsvorgänge ausführen. Die erforderlichen Bewegungen werden von vier angetriebenen Linearachsen und einer angetriebenen Drehachse ermöglicht. Die Bauteile werden von einer Pressenstufe zur nächsten transportiert. Der letzte Transfer legt Fertigteile direkt auf dem Auslaufband ab.

Im Folgenden wird die Erfindung anhand einer lediglich ein Ausführungsbeispiel darstellenden Zeichnung näher erläutert. Es zeigen:
- Fig. 1: eine Pressenanlage mit einer vorteilhaften Ausführungsform einer erfindungsgemäßen Transfervorrichtung in vereinfachter Seitenansicht,
- Fig. 2: eine vorteilhafte Ausführungsform einer erfindungsgemäßen Transfervorrichtung in einer perspektivischen Darstellung,
- Fig. 3: einen Ausschnitt A1 aus Fig. 2,
- Fig. 4: den Gegenstand nach Fig. 2 in einer anderen Ansicht,
- Fig. 5: den vergrößerten Ausschnitt A2 aus Fig. 4,
- Fig. 6: den vergrößerten Ausschnitt A3 aus Fig. 4 und
- Fig. 7: eine vergrößerte Darstellung der Y-Verstellung.

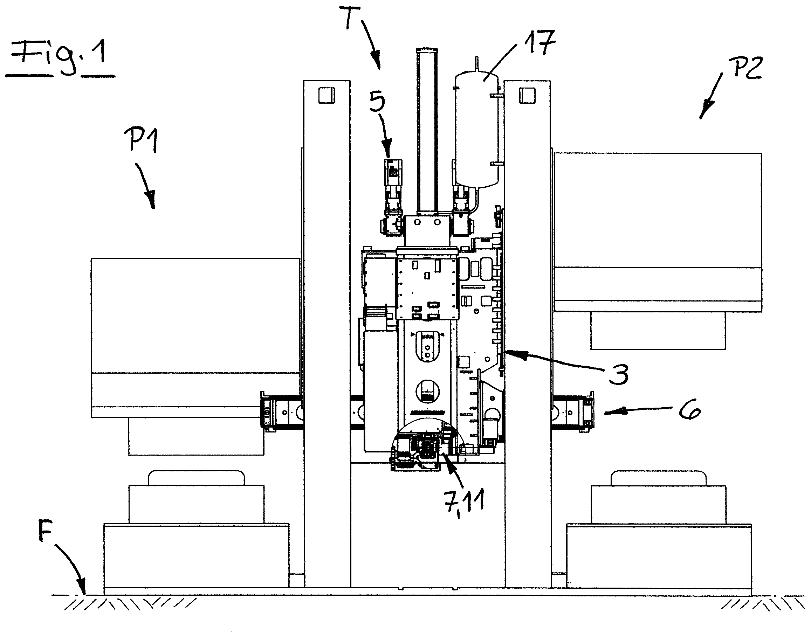

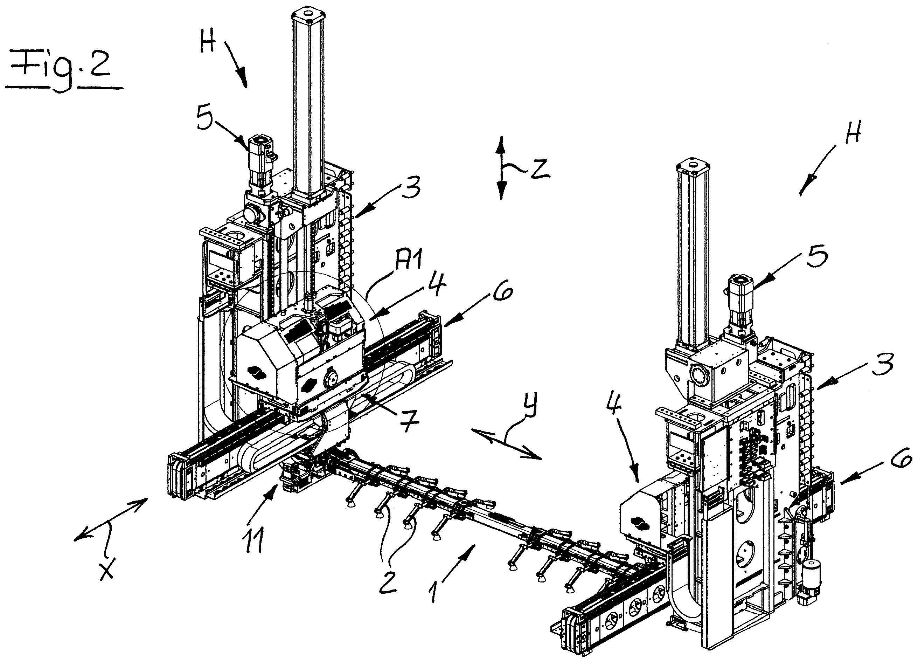

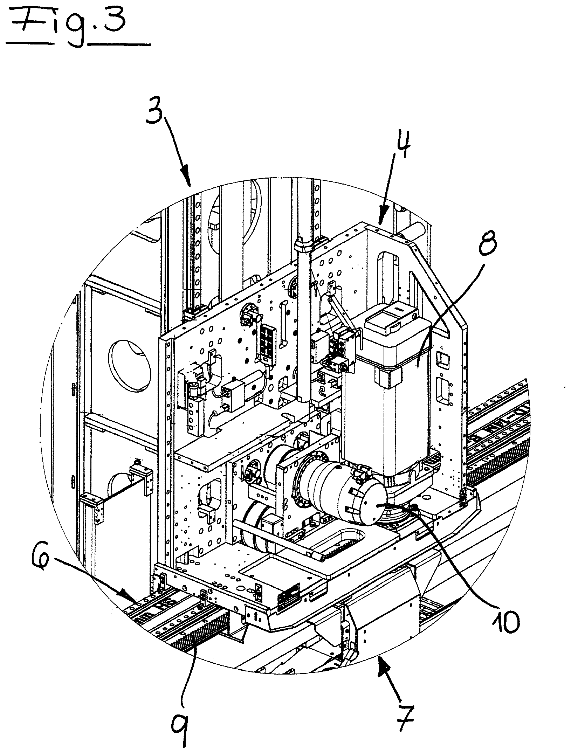

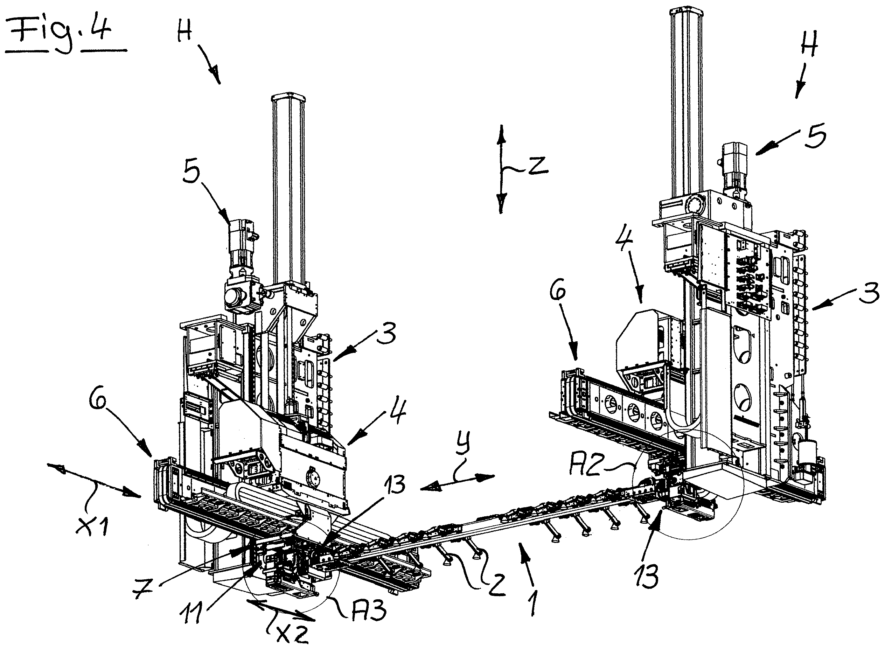

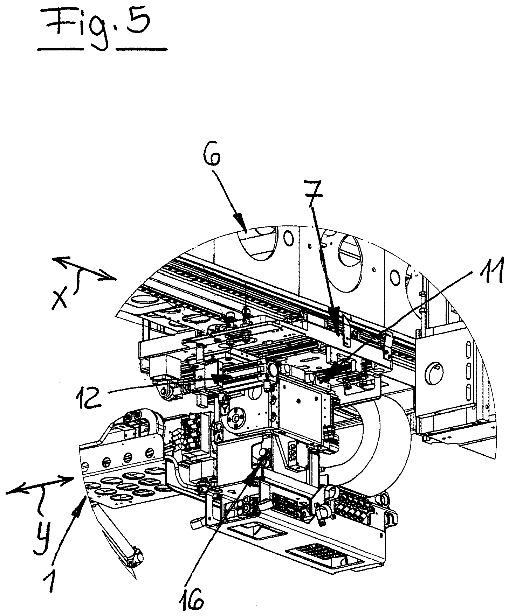

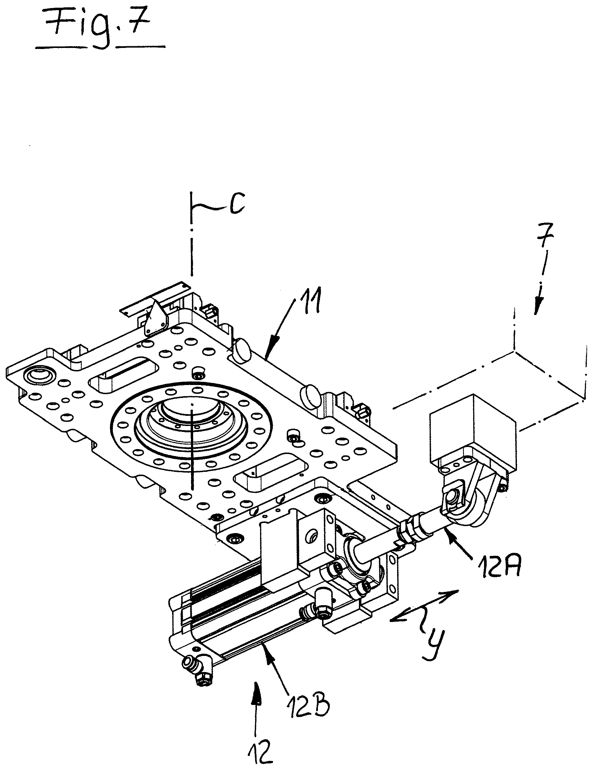

In den Figuren ist eine Transfervorrichtung T für den Transport von Werkstücken (z.B. Karosserieteilen bzw. -Blechen) innerhalb einer Pressenanlage dargestellt. Fig. 1 zeigt ausschnittsweise eine Pressenanlage mit Pressen P1 und P2 mit einer Transfervorrichtung T. Die übrigen Zeichnungen Fig. 2 bis 7 zeigen lediglich die Transfervorrichtung. Die Pressen der Pressenanlage sind in den Fig. 2 bis 7 nicht dargestellt. In der Regel kommt eine solche Transfervorrichtung T bei einer Tandem-Pressenanlage zum Einsatz, wobei pro Pressenstufe P1, P2 eine Transfervorrichtung eingesetzt wird.

Die Transfervorrichtung T weist einen sich in einer Balkenlängsrichtung Y erstreckenden Transferbalken 1 auf, an welchen mehrere Werkzeuge in Form von Greiferarmen 2 befestigt sind. Die Greiferarme sind mit Saugvorrichtungen ausgerüstet, mit denen das jeweilige Werkstück aufgenommen, gehalten und anschließend wieder abgegeben werden kann. Um mit dem Transferbalken 1 verschiedenste Werkstücke variabel von Pressenstufe zu Pressenstufe transportieren zu können, ist der Transferbalken 1 in verschiedenen Freiheitsgraden bewegbar. Dazu besteht die Transfervorrichtung T im Ausführungsbeispiel aus zwei spiegelbildlich angeordneten Transferhälften H und einem kardanisch zwischen den Transferhälften H aufgehängten Transferbalken 1, so dass die beiden Transferhälften H und der dazwischen angeordnete Transferbalken 1, der auch als Saugerbalken bezeichnet wird, die vollständige Transfervorrichtung für einen Hochgeschwindigkeitstransfer bilden.

Jede Transferhälfte H weist einen Vertikalständer 3 auf, der gleichsam die Basis der Transferhälfte bildet, wobei die Vertikalständer 3 an den Pressenständern der entsprechenden Pressenstufe P2, vorzugsweise an der Vorderseite dieser Pressenständer befestigt sind. Sie bilden die Konsolen, an denen jeweils ein Vertikalschlitten bzw. Z-Schlitten 4 in vertikaler Richtung Z verfahrbar ist. Die Führung erfolgt in üblicher Weise über Führungsschienen bzw. Linearführungen. Für die Bewegung des Z-Schlittens 4 in Z-Richtung ist ein Z-Antrieb 5 vorgesehen. In dem dargestellten Ausführungsbeispiel ist dieser Z-Antrieb 5 ortsfest am Vertikalständer 3 angeordnet und er arbeitet über Riemen auf dem Z-Schlitten 4.

An dem höhenverstellbaren Z-Schlitten ist zumindest ein entlang der X-Richtung verfahrbarer X-Schlitten aufgehängt. Im Ausführungsbeispiel sind zwei separate X-Schlitten vorgesehen, die als X1-Schlitten 6 und als X2-Schlitten 7 bezeichnet werden. Der X1-Schlitten ist in der X-Richtung bzw. der X1-Richtung an dem Z-Schlitten 4 verfahrbar. Dazu ist im Ausführungsbeispiel ein X1-Antrieb 8 an dem Z-Schlitten 4 befestigt, wobei dieser X1-Antrieb 8 auf eine Zahnstange 9 arbeitet, die am X1-Schlitten 6 befestigt ist. Der X2-Schlitten 7 ist an dem X1-Schlitten 6 geführt und ebenfalls entlang der X-Richtung, in diesem Fall der X2-Richtung verfahrbar, wobei die X1-Richtung und die X2-Richtung parallel zueinander entlang der X-Richtung verlaufen. Der X2-Schlitten 7 ist im Ausführungsbeispiel mit einem separaten X2-Antrieb 10 verfahrbar, der über einen Riemen auf dem X2-Schlitten 7 arbeitet.

Der Transferbalken 1 ist endseitig an den X2-Schlitten 7 befestigt, wobei Bewegungen des Transferbalkens 1 in verschiedenen Richtungen relativ zu dem X2-Schlitten 7 realisiert sind.

Von besonderer Bedeutung ist die Tatsache, dass der Transferbalken 1 relativ zu dem X2-Schlitten 7 entlang der Balkenlängsrichtung Y bewegbar ist. Dazu ist der Transferbalken 1 endseitig an Y-Schlitten 11 angeschlossen, wobei die Y-Schlitten 11 an den X2-Schlitten 7 entlang der Balkenlängsrichtung Y bewegbar gehalten sind. An den X2-Schlitten 7 sind Y-Stellantriebe 12 angeschlossen, welche entlang der Balkenlängsrichtung Y auf die Y-Schlitten 11 arbeiten, an denen wiederum der Transferbalken 1 befestigt ist. Dabei ist ferner von Bedeutung, dass diese Y-Stellantriebe 12 nicht - wie die übrigen Antriebe - als Servo-Antriebe ausgebildet sind, sondern als Zylinderkolbenanordnungen und zwar im Ausführungsbeispiel in besonders bevorzugter Ausgestaltung als pneumatische Zylinderkolbenanordnungen. Dazu ist im Ausführungsbeispiel die Kolbenstange 12A an den X2-Schlitten 7 angeschlossen, während das Zylindergehäuse 12B an die Y-Schlittenplatte 11 angeschlossen ist, so dass durch Betätigen des Zylinders 12 die Y-Schlittenplatte 11 relativ zu der X2-Schlittenplatte 7 entlang der Y-Richtung verfahren wird.

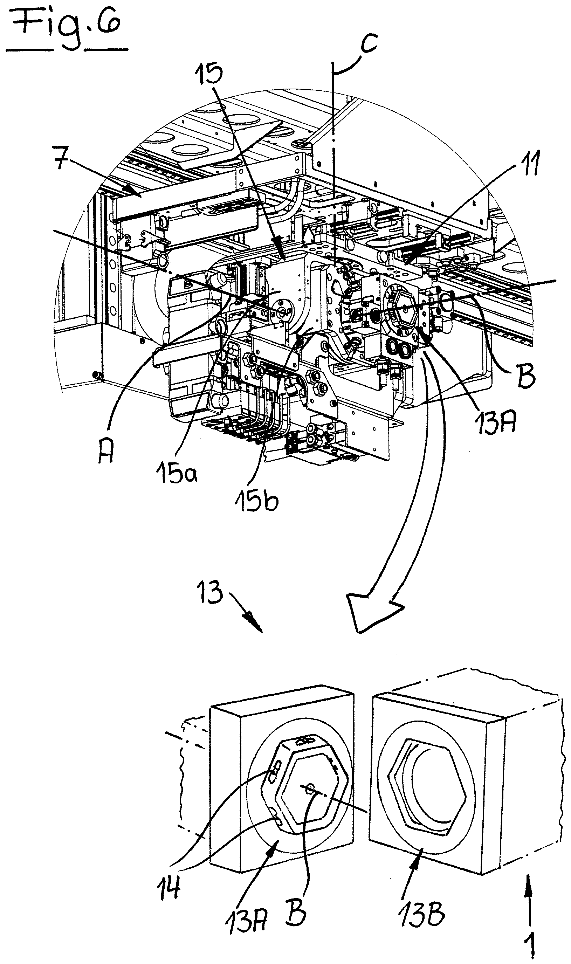

Die Betätigung der pneumatischen Y-Stellantriebe 12 ist zunächst einmal im Zuge des Ein- und Auskuppelns des Transferbalkens 1 von Bedeutung. Denn der Transferbalken 1 ist über lösbare Balkenkupplungen 13 austauschbar an die Y-Schlitten 11 angeschlossen. Dazu weisen die beiden Balkenkupplungen 13 jeweils ein schlittenseitiges Kupplungselement 13A und ein balkenseitiges Kupplungselement 13B auf, wobei diese beiden Kupplungselemente 13A, 13B im Zuge des Einkuppelns in Balkenlängsrichtung Y ineinandergreifen. Im Ausführungsbeispiel greift das Aufnahmeelement 13A in das Balkenelement 13B. Es besteht jedoch umgekehrt die Möglichkeit, dass das Balkenelement 13B in das Aufnahmeelement 13A eingreift. Jedenfalls besteht die Möglichkeit, durch Betätigen der Y-Antriebe 12 die daran angeschlossenen Aufnahmeelemente 13A entlang der Y-Richtung zuzustellen und so den Transferbalken 1 einzukuppeln bzw. auszukuppeln. Im Übrigen ist vorgesehen, dass die Kupplungselemente 13A, 13B verriegelt bzw. entriegelt werden können. Dazu sind in radialer Richtung betätigbare Verriegelungselemente 14 vorgesehen, die ebenfalls pneumatisch betätigbar sind. Dabei wird erfindungsgemäß auf Standardkupplungen zurückgegriffen, die z.B. auch bei Roboter-Werkzeugwechseln zum Einsatz kommen. Dabei ist im oberen Teil der Fig. 6 lediglich das Aufnahmeelement 13A der Kupplung 13 dargestellt. Der Transferbalken mit dem daran angeschlossenen Balkenkupplungselement 13B ist im oberen Teil der Fig. 6 nicht dargestellt, sondern nur im unteren Teil dieser Abbildung angeordnet.

Neben der Funktion der Y-Antriebe 12 zum Einkuppeln und Auskuppeln kommt diesen Y-Antrieben auch eine besondere Bedeutung im Zuge des Ausgleichs von Bewegungen des Transferbalkens 1 zu. Denn in dem dargestellten Ausführungsbeispiel ist der Transferbalken 1 als starrer und (in Betrieb) nicht teleskopierender Balken mit fest vorgegebener bzw. fest eingestellter Balkenlänge ausgebildet. Der Bewegungsausgleich im Zuge der Bewegung der Transferhälften H erfolgt bei dem dargestellten Ausführungsbeispiel folglich nicht durch teleskopierende Bewegung des Transferbalkens 1 selbst, sondern dadurch, dass Bewegungen in Y-Richtung über die beiden Y-Antriebe 12 ermöglicht bzw. zugelassen werden. Dazu können sehr einfache pneumatische Stellantriebe 12 verwendet werden, die nicht weggesteuert werden, sondern lediglich durch pneumatische Betätigung entweder in eine ihrer beiden Endpositionen gefahren werden oder aber "freigelassen" werden, so dass sie sich ohne pneumatische Betätigung passiv zwischen ihren beiden Endpositionen bewegen können. In dem dargestellten Ausführungsbeispiel wird der eine Y-Antrieb als Festlager fest in eine Endposition gefahren und der andere Y-Antrieb kann freie Bewegungen entlang der Y-Richtung zwischen den beiden Endpositionen zulassen. Auf diese Weise kann der Transferbalken 1 den Bewegungen der beiden Transferhälften H folgen, und zwar auch dann, wenn sich die verschiedenen Schlitten der beiden Transferhälften H in unterschiedlicher Weise bewegen. Es sind insbesondere verschiedene Winkelstellungen des Transferbalkens 1 möglich, ohne dass sich dabei die Länge des Transferbalkens 1 selbst ändert. Dieses gelingt über die während des Betriebs gleichsam passiv arbeitenden Y-Antriebe 12. Diesen Y-Antrieben kommt neben der Ausgleichsfunktion und neben der Kupplungsfunktion außerdem noch eine Funktion im Rahmen der Anpassung an die Pressengeometrie bei der Inbetriebnahme zu, da mit Hilfe dieser Y-Antriebe der jeweilige Nullpunkt festgelegt werden kann. Da mit einem nicht teleskopierenden Balken gearbeitet wird, und da einer der Y-Antriebe die Festseite und der andere die Loslagerseite bildet, wandert bei verschiedenen Winkelstellungen der Tooling-Mittelpunkt aus der Mitte heraus, was am Tooling-bzw. Pressentisch berücksichtigt werden muss. Ein solcher leichter Versatz kann jedoch in Betrieb in Kauf genommen werden.

Im Übrigen kann es erforderlich sein, während des Betriebes die einzelnen Greiferarme 2 gegeneinander bzw. auf dem Saugbalken 1 zu verfahren bzw. zu "spreizen". Da der Saugerbalken 1 selbst im Ausführungsbeispiel nicht teleskopierend ausgebildet ist, ist es in diesem Fall zweckmäßig, auf dem Saugerbalken 1 weitere Antriebe vorzusehen, mit denen die Greiferarme relativ zu dem Saugbalken entlang der Y-Richtung verfahrbar sind. Diese sind in den Figuren nicht im Detail dargestellt, sie können jedoch ebenfalls als pneumatische Antriebe ausgebildet sein.

Von besonderer Bedeutung ist darüber hinaus, dass der Transferbalken 1 in verschiedenen Freiheitsgraden relativ zu dem Y-Schlitten bewegbar ist. Dazu ist der Transferbalken 1 um die Balkenachse B drehbar an dem Y-Schlitten angelenkt und im Übrigen auch kardanisch an dem Y-Schlitten angelenkt. Einzelheiten sind in Fig. 6 erkennbar. Dabei ist an den Y-Schlitten 11 ein Aufnahmegehäuse 15 angeschlossen, wobei diese Aufnahmegehäuse 15 um eine vertikale Achse C drehbar an dem Y-Schlitten 11 angeordnet ist. Dazu ist das Aufnahmegehäuse 15 aus einem Außengehäuse 15A und einem Innengehäuse 15B ausgebildet, wobei das Außengehäuse 15A um die C-Achse drehbar an dem Y-Schlitten 11 angelenkt ist. Das Innengehäuse 15B ist um die horizontale Achse A drehbar an dem Außengehäuse 15A gelagert. Der Transferbalken 1 ist dann wiederum um die B-Achse drehbar an bzw. in dem Innengehäuse 15B gelagert, und zwar unter Zwischenschaltung der Kupplung 13. Die Drehungen um die C-Achse und um die A-Achse erfolgen passiv unter Bildung einer kardanischen Aufhängung. Die Drehung um die B-Achse wird aktiv über einen B-Antrieb 16 gesteuert, der ebenfalls als Servo-Antrieb ausgebildet sein kann.

Damit sind insgesamt für jede Transferhälfte H vier Servo-Antriebe vorgesehen, nämlich der Z-Antrieb, der X1-Antrieb, der X2-Antrieb und der B-Antrieb. Damit werden die translatorischen Bewegungen X, Y, Z und die rotatorischen Bewegungen um A, B und C ermöglicht, also insgesamt sechs Freiheitsgrade. Den pneumatischen Antrieben 12 für die Y-Richtung kommt - abgesehen von der Kupplungsfunktion - während des Betriebes lediglich eine passive Funktion im Sinne eines Ausgleichs zu.

Die dargestellte Transfervorrichtung T ermöglicht nicht nur einen sehr schnellen Transfer, sondern sie ist auch sehr kompakt aufgebaut und die einzelnen Komponenten sind gut zugänglich. Von besonderer Bedeutung ist, dass sämtliche Baugruppen oberhalb des Flurs F montiert sind und keine Komponenten in den Pressenkeller gelegt werden müssen. So ist z.B. in den Figuren erkennbar, dass auch die Ausgleichsbehälter 17, die für eine hydraulische Massenkompensation vorgesehen sind, an den Vertikalständern 3 und folglich oberhalb des Pressenflurs F angeordnet sind. Dazu wird auf Fig. 1 verwiesen, die eine vereinfachte Seitenansicht eine an dem Pressenständer montierte Transfervorrichtung mit Ausgleichsbehälter 17 zeigt.

Dadurch, dass sämtliche Baugruppen oberhalb des Flurs F montiert sind und weder Ausgleichsbehälter 17 noch Zylinder und Versorgungsleitungen in den Pressenkeller gelegt werden, wird die Wartung vereinfacht und insbesondere der Zeitaufwand reduziert. Die Komponenten sind gut zugänglich, was wiederum den Zeitaufwand für Wartungsarbeiten verkürzt. Der auf diese Weise zur Verfügung gestellte Raum wird z.B. genutzt mittels Toolings-Carts während des Werkzeugwechsels automatisiert in die Übergabeposition zu fahren.

Der Transferbalken 1 kann im Übrigen in grundsätzlich bekannter Weise aus CFK gefertigt sein. Er ist im Ausführungsbeispiel um bis zu 6° um die A-Achse drehbar und um bis zu 180° um die B-Achse drehbar.

## Patentansprüche

1. Transfervorrichtung (T) für den Transport von Werkstücken innerhalb einer Pressenanlage, insbesondere für den Transport von Karosserieteilen innerhalb einer Pressenanlage für die Automobilindustrie, mit zumindest einem sich in Balkenlängsrichtung (Y) erstreckenden Transferbalken (1), an welchem eine oder mehrere Werkzeuge, z.B. Greiferarme (2) befestigt oder befestigbar sind, wobei der Transferbalken (1) endseitig an entlang einer Transferrichtung (X) verfahrbaren X-Schlitten gehalten ist,
**dadurch gekennzeichnet, dass** der Transferbalken (1) relativ zu den X-Schlitten (6, 7) entlang der Balkenlängsrichtung (Y) bewegbar ist.

2. Transfervorrichtung nach Anspruch 1, **dadurch gekennzeichnet, dass** der Transferbalken (1) als in Betrieb nicht teleskopierender Balken mit fest vorgegebener oder fest eingestellter Balkenlänge ausgebildet ist.

3. Transfervorrichtung nach Anspruch 1 oder 2, **dadurch gekennzeichnet, dass** der Transferbalken (1) endseitig an Y-Schlitten (11) gehalten ist, wobei die Y-Schlitten (11) an den X-Schlitten (6, 7), z.B. an den X2-Schlitten (7) entlang der Balkenlängsrichtung (Y) bewegbar gehalten sind.

4. Transfervorrichtung nach einem der Ansprüche 1 bis 3, **dadurch gekennzeichnet, dass** an den X-Schlitten (6, 7) Y-Stellantriebe (12) befestigt sind, welche entlang der Balkenlängsrichtung (Y) auf den Transferbalken (1) bzw. auf die Y-Schlitten (11) arbeiten.

5. Transfervorrichtung nach Anspruch 4, **dadurch gekennzeichnet, dass** die Y-Stellantriebe (12) als Zylinderkolbenanordnungen, vorzugweise als pneumatische Zylinderkolbenanordnungen ausgebildet sind.

6. Transfervorrichtung nach einem der Ansprüche 1 bis 5, **dadurch gekennzeichnet, dass** der Transferbalken (1) um eine Balkenachse (B) drehbar ist, z.B. um eine Balkenachse (B) drehbar an dem Y-Schlitten (11) befestigt ist, und/oder kardanisch derart an dem Y-Schlitten (11) befestigt ist, dass der Transferbalken (1) um eine vertikale Achse (C) und um eine horizontale Achse (A) drehbar ist.

7. Transfervorrichtung nach einem der Ansprüche 3 bis 6, **dadurch gekennzeichnet, dass** an dem Y-Schlitten (11) ein Aufnahmegehäuse (15) befestigt ist, das vorzugsweise um eine vertikale Achse (C) drehbar an dem Y-Schlitten befestigt ist, wobei der Transferbalken (1) um die Balkenachse (B) drehbar in/an dem Aufnahmegehäuse (15) gehalten ist.

8. Transfervorrichtung nach Anspruch 7, **dadurch gekennzeichnet, dass** das Aufnahmegehäuse (15) ein Außengehäuse (15a) und ein Innengehäuse (15b) aufweist, wobei das Außengehäuse (15a) um die vertikale Achse (C) drehbar an dem Y-Schlitten (11) befestigt ist und wobei das Innengehäuse (15b) um die horizontale Achse (A) an dem Außengehäuse (15a) befestigt ist und wobei der Transferbalken (1) um die Balkenachse (B) drehbar an dem Innengehäuse (15b) befestigt ist.

9. Transfervorrichtung nach einem der Ansprüche 1 bis 8, **dadurch gekennzeichnet, dass** der Transferbalken (1) über lösbare Balkenkupplungen (13) an die Y-Schlitten (11) oder an die X-Schlitten (6, 7), z.B. ein X2-Schlitten (7) angeschlossen ist.

10. Transfervorrichtung nach Anspruch 9, dass die Balkenkupplungen (13) jeweils ein Aufnahmekupplungselement (13a) und ein Balkenkupplungselement (13b) aufweisen, welche im Zuge des Kuppelns ineinandergreifen und vorzugsweise pneumatisch entriegelbar und/oder verriegelbar sind.

11. Transfervorrichtung nach einem der Ansprüche 1 bis 10, **dadurch gekennzeichnet, dass** die Werkzeuge, z.B. die Greiferarme (2), über an dem Transferbalken (1) befestigte Antriebe, z.B. Pneumatik-Zylinder in Balkenlängsrichtung verstellbar sind.

## Claims

1. Transfer device (T) for transporting workpieces within a press installation, in particular for transporting bodywork parts within a press installation for the automobile industry, with at least one transfer beam (1), extending in a beam longitudinal direction (Y), on which one or more tools, e.g. gripper arms (2) are attached or are attachable, wherein at its end the transfer beam (1) is held on X-carriages displaceable along a transfer direction (X)
**characterised in that** the transfer beam (1) is movable relative to the X-carriages (6, 7) along the beam longitudinal direction (Y).

2. Transfer device according to claim 1 **characterised in that** the transfer beam (1) is designed as a non-telescoping beam in operation with a firmly predetermined or fixed set beam length.

3. Transfer device according to claim 1 or 2 **characterised in that** at its end the transfer beam (1) is held on Y-carriages (11), wherein the Y-carriages (11) are held movably along the longitudinal beam direction (Y) on the X-carriages (6, 7), e.g. on the X2-carriages (7).

4. Transfer device according to any one of claims 1 to 3 **characterised in that** attached to the X-carriages (6, 7) are Y-actuators (12) which act along the beam longitudinal direction (Y) on the transfer beam (1) / the Y-carriages (11).

5. Transfer device according to claim 4 **characterised in that** the Y-actuators (12) are designed as cylinder piston devices, preferably as pneumatic cylinder piston devices.

6. Transfer device according to any one of claims 1 to 5 **characterised in that** the transfer beam (1) is rotatable about a beam axis (B), e.g. is fastened rotatably about a beam axis (B) on the Y carriage (11) and/or cardanically on the Y-carriage (11) in such a way that the transfer beam (1) can rotated about a vertical axis (C) and about a horizontal axis (A).

7. Transfer device according to any one of claims 3 to 6 **characterised in that** attached to the Y-carriage (11) is a receiving housing (15) which is preferably attached to the Y-carriage rotatably about a vertical axis (C), wherein the transfer beam (1) is held rotatably about the beam axis (B) in/on the receiving housing (15).

8. Transfer device according to claim 7 **characterised in that** the receiving housing (15) comprises an outer housing (15a) and an inner housing (15b), wherein the outer housing (15a) is attached to the Y-carriage rotatably about vertical axis (C) and wherein the inner housing (15b) is attached about the horizontal axis (A) to the outer housing (15a) and wherein the transfer beam (1) is attached to the inner housing (15b) rotatably about the beam axis (B).

9. Transfer device according to any one of claims 1 to 8 **characterised in that** the transfer beam (1) is connected via detachable beam couplings (13) to the Y-carriages (11) or to the X-carriages (6, 7), e.g. an X2-carriage (7).

10. Transfer device according to claim 9 [*characterised in]* that the beam couplings (13) each have a receiving coupling element (13a) and a beam coupling element (13b), which interlock during the course of coupling and are preferably pneumatically unlockable and/or lockable.

11. Transfer device according to any one of claims 1 to 10 **characterised in that** the tools, e.g. the gripper arms (2) are displaceable in the longitudinal direction of the beam via actuators fastened on the transfer beam (1), e.g. pneumatic cylinders.

## Revendications

1. Dispositif de transfert (T) pour le transport de pièces à l'intérieur d'une installation de presse, notamment pour le transport de pièces de carrosserie à l'intérieur d'une installation de presse pour l'industrie automobile, avec au moins une poutre de transfert (1) s'étendant dans le sens longitudinal de la poutre (Y), sur laquelle un ou plusieurs outils, par ex. : des bras préhenseurs (2), sont ou peuvent être fixés, la poutre de transfert (1) étant maintenue aux extrémités sur des chariots X déplaçables le long d'un sens de transfert (X), **caractérisé en ce que** la poutre de transfert (1) peut être mobile par rapport aux chariots X (6,7) le long du sens longitudinal de la poutre (Y).

2. Dispositif de transfert selon la revendication 1, **caractérisé en ce que** la poutre de transfert (1) est constituée comme poutre non télescopique en fonctionnement avec une longueur de poutre fermement prédéfinie ou fermement réglée.

3. Dispositif de transfert selon la revendication 1 ou 2, **caractérisé en ce que** la poutre de transfert (1) est maintenu aux extrémités sur des chariots Y (11), les chariots Y (11) étant maintenus de façon mobile sur les chariots X (6,7), par ex. : sur les chariots X2 (7) le long du sens longitudinal de la poutre (Y).

4. Dispositif de transfert selon l'une quelconque des revendications 1 à 3, **caractérisé en ce que** des mécanismes de commande Y (12) sont fixés sur les chariots X (6,7), lesquels fonctionnent le long du sens longitudinal de la poutre (Y) sur la poutre de transfert (1) ou sur les chariots Y (11).

5. Dispositif de transfert selon la revendication 4, **caractérisé en ce que** les mécanismes de commande Y (12) sont constitués comme systèmes à piston de vérin, de préférence comme systèmes pneumatiques à piston de vérin.

6. Dispositif de transfert selon l'une quelconque des revendications 1 à 5, **caractérisé en ce que** la poutre de transfert (1) peut tourner autour d'un axe de poutre (B), par ex. : est fixée sur le chariot Y (11) pouvant tourner autour d'un axe de poutre (B),et est fixée sur le chariot Y (11) par cardan de telle manière que la poutre de transfert (1) peut tourner autour d'un axe vertical (C) et autour d'un axe horizontal (A).

7. Dispositif de transfert selon l'une quelconque des revendications 3 à 6, **caractérisé en ce qu'**un boîtier de réception (15) est fixé sur le chariot Y (11), qui est fixé sur le chariot Y de préférence pouvant tourner autour d'un axe vertical (C), la poutre de transfert (1) étant maintenue pouvant tourner autour de l'axe de poutre (B) dans/sur le boîtier de réception (15).

8. Dispositif de transfert selon la revendication 7, **caractérisé en ce que** le boîtier de réception (15) comporte un boîtier extérieur (15a) et un boîtier intérieur (15b), le boîtier extérieur (15a) étant fixé sur le chariot Y (11) pouvant tourner autour de l'axe vertical (C) et le boîtier intérieur (15b) étant fixé autour de l'axe horizontal (A) sur le boîtier extérieur (15a) et la poutre de transfert (1) étant fixée pouvant tourner autour de l'axe de poutre (B) sur le boîtier intérieur (15b).

9. Dispositif de transfert selon l'une quelconque des revendications 1 à 8, **caractérisé en ce que** la poutre de transfert (1) est raccordée par le biais d'accouplements amovibles de poutre (13) aux chariots Y (11) ou aux chariots X (6,7), par ex. : un chariot X2 (7).

10. Dispositif de transfert selon la revendication 9, **caractérisé en ce que** les accouplements de poutre (13) comportent respectivement un élément d'accouplement de réception (13a) et un élément d'accouplement de poutre (13b), lesquels s'engrènent l'un dans l'autre au cours de l'accouplement et peuvent être déverrouillables et/ou verrouillables de préférence de façon pneumatique.

11. Dispositif de transfert selon l'une quelconque des revendications 1 à 10, **caractérisé en ce que** les outils, par ex. : les bras préhenseurs (2), peuvent être réglés dans le sens longitudinal de la poutre par le biais des commandes fixées sur la poutre de transfert (1), par ex. : des vérins pneumatiques.
